# FASCICULE DE BREVET EUROPEEN

(11) **EP 1 877 267 B1**
(45) Date de publication et mention de la délivrance du brevet: **15.12.2010**
(21) Numéro de dépôt: 06743723.6
(22) Date de dépôt: 19.04.2006
(51) Int. Cl.: B60C 17/01

(54) **CHAMBRE A AIR INCREVABLE**
NICHT DURCHSTECHBARER INNENREIFEN
UNPUNCTURABLE INNER TUBE

(30) Priorité: 27.04.2005 FR 0504336
(43) Date de publication de la demande: 16.01.2008
(73) Titulaire: Biesse, Philippe, 30127 Bellegarde (FR)
(72) Inventeur: Biesse, Philippe, 30127 Bellegarde (FR)
(86) Numéro de dépôt international: PCT/FR2006/000904
(87) Numéro de publication internationale: WO 2006/114504

(56) Documents cités:
- WO-A-99/54154
- WO-A-2005/018920
- CH-A- 509 173
- DE-A1- 10 232 066
- FR-A- 639 721
- FR-A- 2 720 336
- FR-A1- 2 457 778
- US-A1- 2003 019 553
- US-A1- 2005 051 249

## Description

### Domaine technique.

La présente invention concerne un dispositif destiné à aider un véhicule monté de pneumatiques, qu'il soit léger de route, tout terrain, véhicule de transport routier, de manutention ou engin agricole ou de chantier, et véhicule blindé (par exemple véhicule civil de transport de personnalités ou de transport de fonds), à deux, trois, quatre roues ou plus, à poursuivre sa route sans avoir à réparer la roue après une crevaison même très sévère.

### Technique antérieure.

Ce type de situation est traditionnellement géré par l'adoption de pneus dits à roulement à plat pour certains véhicules nouveaux de haut de gamme, par pneus pleins pour les engins de transport lourd ou de manutention, ou encore d'autres techniques pour les véhicules blindés. On peut citer enfin les pneus à structure interne et chambres différentiées comme ceux objet du brevet WO 99/54154 (Barone)

L'inconvénient majeur de ces dispositifs est la limitation de vitesse et de distance qui s'ensuit pour les véhicules de route ainsi que les limitations importantes de charge qu'accepterait un véhicule utilisé en transport. Quant aux pneus pleins, même si l'efficacité contre la crevaison reste très bonne, le dis confort de conduite, les inerties en rotation des roues et la limitation de vitesse et vibrations provoqués par le poids et la raideur du caoutchouc plein limitent l'utilisation aux seuls engins pour aires de manutention.

Ces dispositifs demandent une adaptation ou des changements des jantes et des pneus déjà existants sur le véhicule. Ils demandent également pour certaines technologies un remplacement complet de l'ensemble après que la limite de distance lors d'une première crevaison ait été atteinte. En effet les matériaux sollicités une fois au-delà de leur limite ne peuvent plus être réutilisés.

Certaines technologies sont également mieux adaptées aux pneus dits à taille basse (section du pneu très plate) qu'aux pneus taille haute ou normale. Après la crevaison, le roulement se fait sur des diamètres apparents des roues d'un même essieu très différents et faisant travailler fortement et de façon continue le différentiel. Le pneu crevé ne participe plus à la tenue de route du véhicule car il n'est plus du tout soutenu dans le sens latéral.

Enfin, ces dispositifs formant un tout, il devient onéreux de prévoir pour chaque type de route (sèche, tout terrain, neige etc.) des options d'optimisation de conduite. Les utilisateurs de certains pays à comportement climatique particulier utilisent encore des types de pneus bien spécifiques et changent leur monture suivant la saison ou le terrain. Il leur faudrait donc disposer d'un système de pneu dit increvable pour chaque type de terrain.

La technique du brevet WO 99/54154 permettent au pneu de garder approximativement sa forme lors d'une crevaison, mais il a l'inconvénient de constituer un ensemble complet se montant sur la jante et nécessite donc le changement par rapport à un pneu standard déjà installé sur le véhicule, et le maintient en stock d'une ensemble de 4 pneus spécifiques pour chaque type de route ou saison.

### Exposé de l'invention.

Le dispositif selon l'invention permet de remédier à ces inconvénients. Il consiste en la mise en place d'un ensemble spécial de vessies indépendantes de type chambre à air, étanches à l'air sous pression ou autre fluide de gonflage, à l'intérieur de n'importe quel type de pneu standard, qu'il soit avec chambre ou normalement sans chambre, taille haute ou taille basse, temps sec, neige ou tout terrain, pour véhicule haut de gamme ou standard, de route ou de transport.

Il comporte selon une première caractéristique et pour chaque roue un ensemble constituée de grappes de vessies souples 1 en caoutchouc reliées entre elles par un cordon 2 souple constitué du cordon principal 2.1, de ramifications (ou branches de distribution) 2.2, 2.3, 2.4 et d'un embout pour le gonflage 3. Le terme caoutchouc regroupe ici toutes les sortes de matériaux naturels, synthétiques, mono ou poly composants, mélanges au latex, butyle etc. faisant partie de la famille étendue des caoutchouc.

Le volume élémentaire de chaque vessie 1 et la distance initiale entre elles sont tels que l'ensemble constitué et gonflé à la pression de service dans le pneu 4 remplit entièrement son volume, en lui transmettant la pression nécessaire à la bonne conduite suivant les recommandations du constructeur. C'est à dire que l'augmentation de volume de chacune d'entre elles est limitée par la présence des autres et finalement par les parois du pneu et non par la tension de sa membrane. La vessie occupe un volume non régulier et sensiblement supérieur à celui de sa forme sphérique lorsqu'elle est en légère pression à l'air libre. Cet excès de volume qui se traduit par un léger allongement (et donc tension) de sa membrane est nécessaire pour compenser la variation de forme que le volume fermé du pneu et ses voisines lui imposent, pour maintenir une pression correcte dans l'ensemble des vessies qu'elles soient proches de la jante ou en périphérie, pour permettre une mise en place rapide et stabilisée des vessies intactes après un incident de crevaison et pour maintenir leurs valves parfaitement étanches. Cette surpression est à ajouter à la pression normale de gonflage demandée par le constructeur du pneumatique et suivant une relation qu'il validera.

En effet, avec la vitesse, les membranes sont soumises à des effets centrifuges relativement importants qui diffèrent suivant leur épaisseur et la position de la vessie dans le pneu. Ces effets génèrent des modifications de pression croissantes de la jante vers la périphérie du pneu. Les vessies dont la forme à l'arrêt dans le pneu gonflé est proche d'une forme cubique vont s'allonger du coté de la jante et s'aplatir du coté de la bande de roulement. A l'extrême, pour des vitesses trop importantes par rapport à la pression (environ 200 km/h pour 2 bars), on aurait une concentration de vessies sur la périphérie. Les excès de pression seront cependant limités par rapport à la structure et l'épaisseur de la membrane, de sorte que si la vessie était laissée à l'air libre, elle aurait encore un potentiel d'augmentation de volume important avant un éclatement éventuel. Pour ordre de grandeur, une vessie à membrane raidie de diamètre Do et de volume Vo à pression nulle, atteindrait des valeurs de l'ordre de Do+6% et Vo+20% à 2 bars et Do+ 12% et Vo+40% à 4 bars. Ces raideurs permettent aussi une meilleure homogénéité de l'augmentation de volume des vessies et une diminution des effets d'échauffement. Des raideurs moins importantes sont adéquates suivant les applications.

Les vessies ont un diamètre de l'ordre du pouce, en général un à deux pour les deux roues, deux à trois pour les voitures de tourisme et plus de trois pour les poids lourds. Des chevauchements de ces plages indicatives et d'autres valeurs existent, elles sont également fonction de l'application. Pour ordre de grandeur, un pneu de largeur 200 mm, hauteur 100 mm, sur roue de 16 pouces contiendrait environ 2000 vessies de 1 pouce de diamètre ou 250 vessies de diamètre deux pouces pour environ 4 et 2 kg de caoutchouc. Un pneu de camion 275/70 R22,5 contiendrait 1000 balles de tennis (diamètre de 2.2 pouces) ou 60 balles de handball (diamètre d'environ 6 pouces).

L'épaisseur des membranes et leur composition est fonction des rapports poids, volume, raideur à obtenir, mais également des échauffement crées par les mouvements relatifs entre les parois lors des déformations de l'ensemble des vessies.

L'entrée d'air (d'azote ou d'un autre gaz ou mélange de gaz) de gonflage se fait par une mini valve de non retour 9 fermée étanche à très faible pression dans le sens retour entre les ramifications du cordon 2 et la vessie 1 . Pour cela, on utilisera de préférence des valves avec chaussette 9.3 en butyle montées sur un tube borgne 9.1 percé d'un petit trou latéral 9.4. La tension initiale de la chaussette sera faible pour permettre une entrée de gaz dès les premiers grammes de pression et le tube sera très léger, par exemple en matière plastique (polyuréthane). On évitera les clapets métalliques qui pourraient s'ouvrir sous les forces centrifuges à grande vitesse.

Le cordon 2 comporte donc un grand nombre de ramifications primaires 2.2 elles mêmes divisées en branches secondaires 2.3 au sein de chaque grappe, toutes auront le même diamètre pouvant être inférieur à celui du cordon principal 2.1. Il est souple mais suffisamment raide dans sa forme intérieure pour ne pas se bloquer par pliage (qui pourrait intervenir lors du gonflage si le cordon n'a pas été déployé avec suffisamment de soin) ou par le compression exercée par les vessies. Il est situé sur un pourtour de centre des grappes et a un diamètre plus grand que celui du bord de jante 5.2 pour ne pas interférer lors du montage. Il est capable d'un allongement élastique. Les ramifications vers les grappes puis vers les vessies élémentaires donnent la forme approximative d'une « chambre à air » classique à l'ensemble.

Le cordon principal 2.1 est alimenté par une branche d'alimentation 2.4 terminée par un embout 3 avec adaptateur pour le gonflage. Cet embout est placé dans l'orifice de la jante 5.5 prévu pour le passage de la valve classique. Pour éviter de nuire à leur fermeture, le cordon ne devrait en aucun cas être fermé étanche si les valves 9 avaient la moindre sensibilité à l'effet centrifuge.

Lors d'une crevaison, le pneu sera transpercé en un ou plusieurs points par un ou des orifices plus ou moins gros. Les vessies dans le voisinage immédiat des blessures de pneu seront percées et vont se dégonfler, voire éclater. Celles environnantes ainsi que l'ensemble des autres vont donc avoir tendance à occuper le volume libéré et à augmenter elles mêmes en volume, diminuant ainsi leur pression intérieure sur tout le volume du pneu. La pression globale agissant sur l'intérieur du pneu sera donc également diminuée dans un rapport égal en première approximation au ratio du nombre de vessies restantes non perforées sur le nombre initial. Il y aura bien un déséquilibre (balourd) du pneu malgré le réarrangement des vessies avec un léger transfert des masses vers le lieu de la crevaison. Ce transfert sera quand même faiblement limité par les frottements inter vessies et l'augmentation de volume sera légèrement plus important du coté de la crevaison (et la pression appliquée au pneu très légèrement inférieure). Cependant Il n'y aura pas un vidage du pneu et la poursuite de la conduite sera possible.

Lors d'une crevaison à grande pénétration crée par exemple par un ou plusieurs projectile d'arme à feu ou un passage sur une herse, le principe reste identique bien que par la trajectoire à l'intérieur du pneu, le nombre des éléments endommagés peut être pus important.

La double épaisseur de paroi de la ou des vessies percées sera plaquée aux environs du trou et constituera un écran protecteur entre les autres restées intactes et d'éventuels fils d'acier de la structure, punaises ou pointes restés apparents et dangereux sur la surface intérieure du pneu. En principe, les ouvertures dans le pneu ne permettront pas l'échappement des vessies. Une taille supérieure d'éléments peut être choisie en fonction de l'application et des types de crevaison associés. Une option de montage avec filet peut également être avantageuse.

Il est à noter que lors de l'opération de gonflage, la mise en forme des vessies se fera dans un premier temps avec évacuation de l'air contenu dans le pneu lui même, par contre, une fois les flancs plaqués contre la jante, le pneu, et à fortiori celui de type sans chambre, deviendra étanche et ne permettra plus cette évacuation. Il s'en suit qu'un volume d'air emprisonné va se trouver piégé entre des vessies. Ceci n'est pas gênant pour la plupart des pneus, cependant, afin de contrôler ce phénomène et de pouvoir le limiter, il est prévu d'intercaler une languette plate et creuse 6 entre la jante et la tringle du pneu jusqu'à ce qu'elle soit retirée par force et éventuellement de façon destructive dès l'atteinte d'une pression donnée. Cette languette en acier poli ou téflon aura la forme du bord de jante avec un bec de traction et sera graissée avant le gonflage. Alternativement cette languette peut être remplacée par un trou de purge 5.6 reliant l'extérieur à la partie intérieure de la gorge de jante, au niveau du tube drain 8 et sa vis de fermeture 7. Ce trou de purge se situe sur la même circonférence que le trou de valve 5.5 et dans sa proximité.

Pour démonter un pneu après crevaison ou sans crevaison, il faudra percer volontairement quelques vessies de la chambre soit par passage d'une aiguille dans le trou laissé au pneu par la crevaison ou dans l'espace entre le bord de jante et le pneu. Ceci peut être fait directement sur une machine de démontage 15 à 19 qui va faire descendre le flanc extérieur du pneu. La profondeur de poussées est d'environ 40 mm jusqu'à la gorge de la jante. Il est alors possible de percer les vessies en question. Il convient ensuite de faire pénétrer le sabot du démonte pneu et de faire sortir le premier flanc. Les vessies de grappes non percées pourront sortir avec des sursauts élastiques à contrôler.

Selon une deuxième caractéristique, les grappes de vessies 1 seront remplacées par les tranches 10 d'une chambre à air cloisonnée dans des plans axiaux. Les tranches d'un nombre en général compris environ entre 10 et 50 sont reliées par un cordon 2.1 qui parcourra un chemin proche du bord extérieur de la jante, ou du bord de la gorge de jante (dans ce cas le cordon sera élastique pour pouvoir être monté) et auront chacune une valve 9 du même type que les vessies de la première caractéristique. Cette disposition réduit le nombre d'éléments de la « chambre » multiple ainsi constituée. Après une crevaison, la pression résiduelle sera statistiquement inférieure à celle obtenue avec les grappes de vessie du fait du plus gros pourcentage de volume crevé (environ une tranche sur vingt contre quelques vessies sur plusieurs centaines) par rapport au volume total , mais cela ne sera pas significatif. Par contre la disposition de tranches n'est pas adaptée à la possibilité de crevaison par projectiles se propageant dans une direction perpendiculaire à l'axe et traversant plusieurs tranches. Cette disposition ne sera pas à conseiller pour les véhicules blindés.

Comme pour les grappes, le membranes auront des contraintes de surpression mais à un degré moindre du fait de leur plus grand volume et d'un effet de peau moins important. Elles auront aussi moins de frottements entre elles et donc moins d'échauffement et de perte de rendement au roulement. Leurs formes et dimensions de fabrication seront spécifiques à chaque type, dimension et section de pneu. Le nombre réduit d'éléments permet un poids de caoutchouc, une sensibilité à l'effet centrifuge et un coût moindres.

De même que pour les grappes de la première disposition, on doit utiliser la languette 6 ou la vis de purge 7 lors du gonflage pour éliminer une partie de l'air contenu entre le volume interne du pneu et le volume externe des tranches.

Pour démonter un pneu après crevaison ou sans crevaison, il faudra, similairement à la procédure de la première disposition, percer volontairement quelques tranches de la chambre.

Selon une troisième caractéristique, les vessies 1 sont remplacées par des balles 11 qui ne sont plus reliées par un cordon de distribution d'air. Elles ont une structure semi rigide qui leur permet de conserver leur volume nominal lorsqu'une légère surpression extérieur de quelques grammes existe par rapport à la pression intérieure. Ces quelques grammes sont suffisants pour traverser la valve 9 et laisser entrer le gaz à l'intérieur des balles. Par contre les valves sont immédiatement étanches dans l'autre sens. La structure peut être crée suivant déférents procédés par un choix adéquat de structure, matériaux, d'épaisseur de la membrane 11.1 par exemple environ 1 mm pour une balle de diamètre un pouce pour un type de caoutchouc armé nylon et assez dur). Pour ordre de grandeur, une balle de tennis classique avec un diamètre de 60 mm et une épaisseur de caoutchouc de 4 à 5 mm résiste à une sous pression d'environ 0.2 bar.

Suivant cette disposition, un nombre défini de balles non gonflées (en fait elles contiennent de l'air à la pression atmosphérique d'environ 0 bar effectif mais 1 bar absolu) ou gonflées à quelques grammes de pression effective, sera introduit dans le pneu au moment de son montage sur la jante, le flanc intérieur dans la jante et l'extérieur hors de la jante.

En fin d'opération, le volume initial de remplissage des balles représentera environ quatre-vingt pour cent du volume total intérieur du pneu. La tringle du deuxième flanc sera montée et le pneu de type sans chambre sera alors gonflé lentement jusqu'à une pression seuil d'environ 30 à 40 pour cent supérieure à la pression nominale. Les balles se rempliront donc lentement de gaz à cette pression. Après un temps de stabilisation, il suffira alors de dégonfler rapidement le pneu qui atteindra la pression équivalente finale désirée. Les balles (de par leur surpression intérieure) gonfleront et rempliront le volume du pneu en chassant le gaz inter cellulaire jusqu'à l'obtention de l'équilibre pression/volume. Les balles et le peu de gaz intercellulaire restant plaqueront les flancs du pneu et assureront l'étanchéité et la capacité du pneu en tenue de route.

En cas de crevaison, le gaz des quelques balles endommagées (et le gaz résiduel intercellulaire) s'échappera, les autres combleront le volume ainsi libéré. Le calcul de la pression seuil de gonflage se fait en fonction du ratio de volume d'occupation des balles dans le pneu (donné par un abaque : nombre et diamètre des balles introduites / volume du type de pneu), le ratio des pressions absolues entre pression de seuil et pression finale, et la tension des membranes et expansion des balles à obtenir.

La procédure de démontage est similaire à celle de la première disposition. Il est à noter que lors de l'extraction du flanc extérieur du pneu à la machine de démontage, certaines balles risqueraient de jaillir de façon incontrôlée.

Selon une quatrième caractéristique, les balles 11 de la troisième disposition sont construites avec une structure 11.1 renforcée à l'intérieur 11.2. Cette structure permet de maintenir la forme sphérique lors d'une légère dépression intérieure sans augmenter beaucoup l'épaisseur et le poids des balles 11. L'ordre de grandeur des dépressions à contrôler est de 0.05 à 0.1 bar suivant la pression d'ouverture des valves 9, en général inférieure à 0.04 bar. Elle limitera aussi partiellement l'expansion de la vessie/balle lors du gonflage jusqu'à la surpression.

Selon une cinquième caractéristique, les vessies 1 et balles 11 des première et troisième dispositions et éventuellement tranches 10 de la deuxième disposition sont construites avec des bandages croisés autour de la paroi en caoutchouc. Ces bandages seront réalisés suivant des latitudes et longitudes avec un tissage en zigzag. C'est à dire que la direction des fibres permettra la vessie d'augmenter aisément de dimension dans les deux directions de sa surface et donc de volume jusqu'à ce que les zigzag soient devenus droits. On obtient donc ainsi une limitation à l'expansion et on évite ainsi que toutes les balles n'explosent en cascade si le ratio de vide dans le pneu devient trop important. Les bandages aident aussi à augmenter la rigidité des balles à la dépression.

Selon une sixième caractéristique, les vessies 1 et balles 11 des première et troisième dispositions et éventuellement tranches 10 de la deuxième disposition sont assemblées dans un filet 20 constitué de mailles de petite dimension, environ un cm par un cm, en fibres et jointes par des noeuds. Celui-ci évite l'évasion des balles si la crevaison laisse une ouverture importante dans le pneu, il maintient les parois des vessies en face d'un trou béant pour éviter la formation d'une hernie, grâce à la porosité des ses fibres et de ses noeuds il draine l'air pour la purge du pneu lors du remplissage des grappes, balles et tranches, il permet la livraison commerciale et les test d'un ensemble complet, et finalement, il contient les balles pour la sécurité du personnel lors du démontage.

Les filets personnalisés commercialisés pour chaque dimension de pneu contiennent le nombre requis de balles et ont la forme adéquate, ce qui permet de contrôler mieux les pressions de sur gonflage à conseiller.

Selon une septième caractéristique, les valves 9 des vessies 1, tranches 10 et balles 11 des première, deuxième, troisième et quatrième dispositions possèdent un élément (par exemple 9.4) fusible par dissolution. Sur un pneu non endommagé, le dégonflage se fera par l'introduction dans le pneu d'un gaz dissolvant. Cette introduction se fait par la valve 3 ou 3a à pression supérieure à celle du gonflage et sur une petite quantité, suffisante pour que le fluide arrive au niveau de plusieurs valves 9. Le dégonflage se fera par échappement lent et contrôlé par la valve de la roue après un temps nécessaire à la réaction de dissolution. Ce fluide n'altérera pas la résistance des caoutchoucs (latex, butyle etc.) utilisés pour les chambres et pneus.

Selon une huitième caractéristique, les vessies 1, les tranches 10 et les balles 11 des première, deuxième et troisième disposition peuvent être récupérées, voire réparées pour réutilisation. Cette opération n'est réalisable que si un contrôle systématique s'en suit.

Les vessies 1, 10 ou 11 non percées pourront être récupérées et vidées de leur air par désaccouplement du cordon et utilisation d'une aiguille creuse (seringue) enfoncée dans le fond de valve 9.4 en caoutchouc. Le caoutchouc de fond de valve est « contraint » à l'intérieur du tuyau 9.2 qui se refermera de façon étanche après l'opération. Elles seront réutilisées avec un cordon neuf rabouté et collé convenablement.

Les vessies percées 1, 10, 11 peuvent éventuellement être réparées avec des rustines.

Selon une neuvième caractéristique, les vessies 1, tranches 10 et balles 11 des première, deuxième et troisième dispositions sont contrôlées avant utilisation suivant des tests particuliers.

Les valves 9 sont testées pour la pression d'ouverture et l'étanchéité avant montage dans les vessies 1, 10 ou 11.

Les vessies 1, 10, 11 montées de leurs valves 9 sont testées pour les fuites par mise en pression des vessies à 50 gr et passage en chambre sous vide à -1 bar pendant plusieurs minutes. Les vessies seront alors gonflées par rapport à la chambre sous vide et les fuyardes perdront une partie de leur air. Après retour à la pression atmosphérique on palpera les vessies. Les fuyardes seront aplaties. Les variations de la pression atmosphérique (pouvant atteindre près de 10% de la pression atmosphérique) seront pris en compte lors des essais et du pré-gonflage.

Par lot fabriqué, un échantillon est testé complètement jusqu'à la pression d'éclatement.

La validation des tests permet aux constructeurs de corriger ou de donner une correspondance aux marquages d'origine du pneu (lettre ou chiffre surmoulé ou gravé sur le flanc du pneu indiquant la gamme de vitesse d'utilisation) avec un marquage correspondant à l'utilisation de l'un des systèmes de l'invention.

Selon une dixième caractéristique, les pressions mentionnées dans les dispositions précédentes sont transposables suivant le type d'application. Les valeurs courantes de pression de gonflage données à titre d'exemple pour des pneus de voiture normalement gonflés à environ 2 bars sont à moduler pour des pressions différentes. Les épaisseurs et structures des vessies 1, balles 11, tranches 10... évolueront en conséquence. Notamment pour les pressions usuelles de l'ordre de 6 bars pour les poids lourds.

Selon une onzième caractéristique, on peut utiliser une machine spéciale 15, 16, 17, 18, 19 pour le démontage des pneus. Cette machine consiste en un plateau 15 sur lequel est posée la roue sur son coté intérieur par rapport au véhicule, une presse 16 qui va pousser par l'intermédiaire des raidisseurs 18 et 19sur deux demi mâchoires 17a et 17b dont la forme semi circulaire permet de s'inscrire entre le bord de jante supérieur 5.2 et le flanc supérieur du pneu 4 sur un diamètre le plus près possible du nominal de la roue. Poussant ainsi avec une pression résistante du pneu de deux bars sur une couronne de trois centimètres de large et un rayon de quatre cent millimètres, l'effort nécessaire à la presse est d'environ 750 kg. La profondeur de poussées est de 40 mm jusqu'à la gorge de la jante. Il est alors possible de percer les vessies 1, 10 ou 11 rendues accessibles pour réduire sensiblement la pression apparente à l'intérieur du pneu. Il convient ensuite de faire pénétrer le sabot du démonte pneu et de faire sortir le premier flanc. Les vessies de grappes non percées pourront sortir avec des sursauts élastiques à contrôler.

### Description sommaire des dessins.

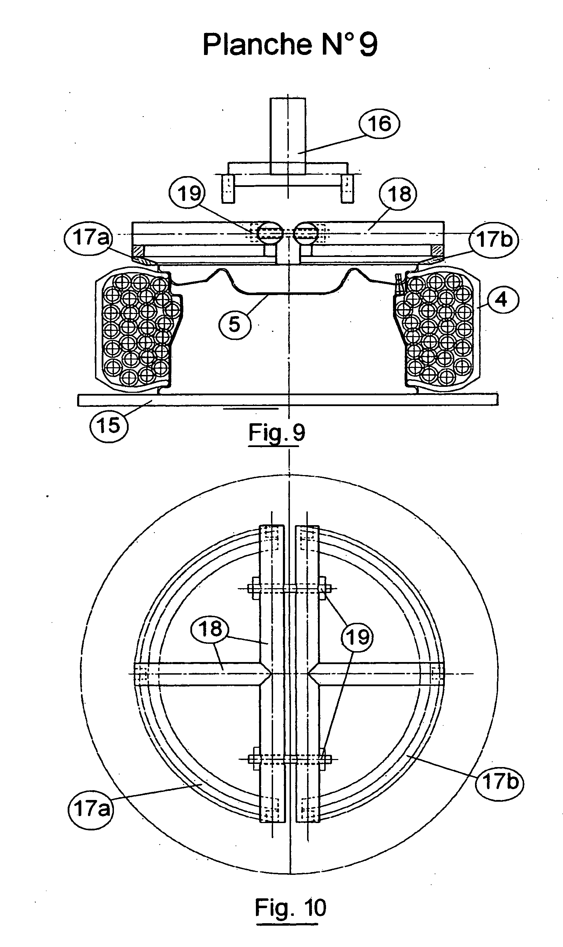

- Planche N° 1 :: Section de pneu monté suivant première disposition.

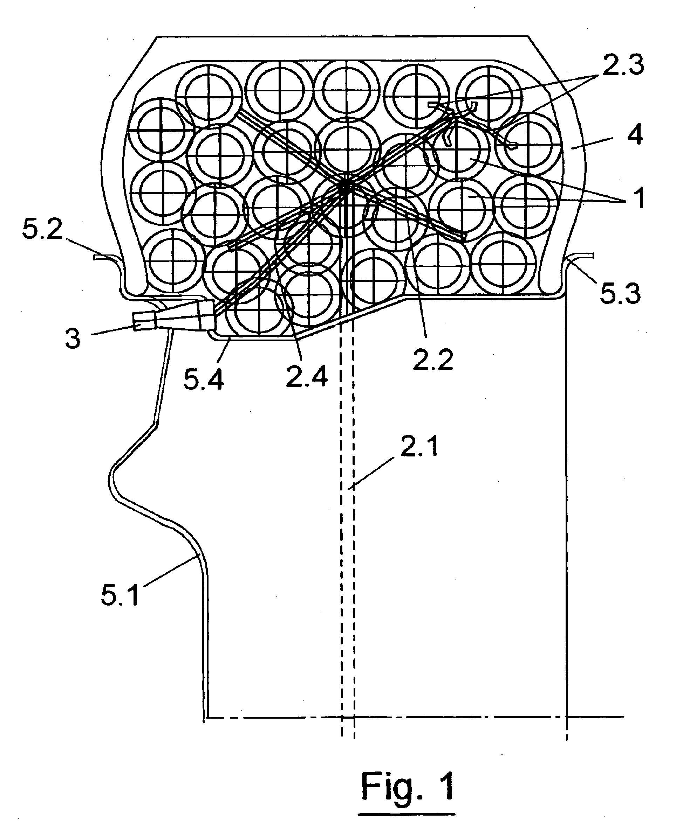

- Fig. 1 : 2: Les vessies 1 à l'intérieur de l'espace annulaire du pneu 4 sont alimentées par le cordon avec cordon principal 2.1, branches de distribution 2.2 et 2.3. Le cordon est gonflé par la valve 3 connectée à l'extrémité de la branche d'alimentation 2.4.Les parties flasque 5.1, bord de jante extérieur 5.2, bord de jante intérieur 5.3 et fond de jante avec gorge 5.4 délimitent la jante.
- Planche N° 2 :: Détail des drains et évents de gonflage du pneu.

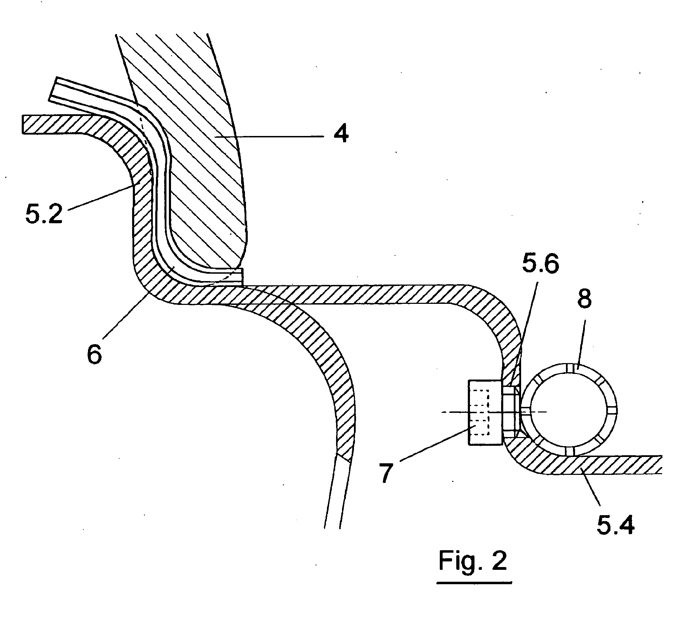

- Fig. 2 :: Le fond de jante 5.4 est percé d'un trou taraudé 5.6 dans lequel la vis de purge 7 prend place. Elle se situe face au tuyau de drain 8. Alternativement on peut utiliser la languette provisoire 6 insérée entre le pneu 4 et le bord de jante extérieur 5.2. La partie supérieure est décollée du bord de jante pour en faciliter l'extraction en fin de gonflage.
- Planche N° 3 :: Détail de cordon pour 192 vessies.

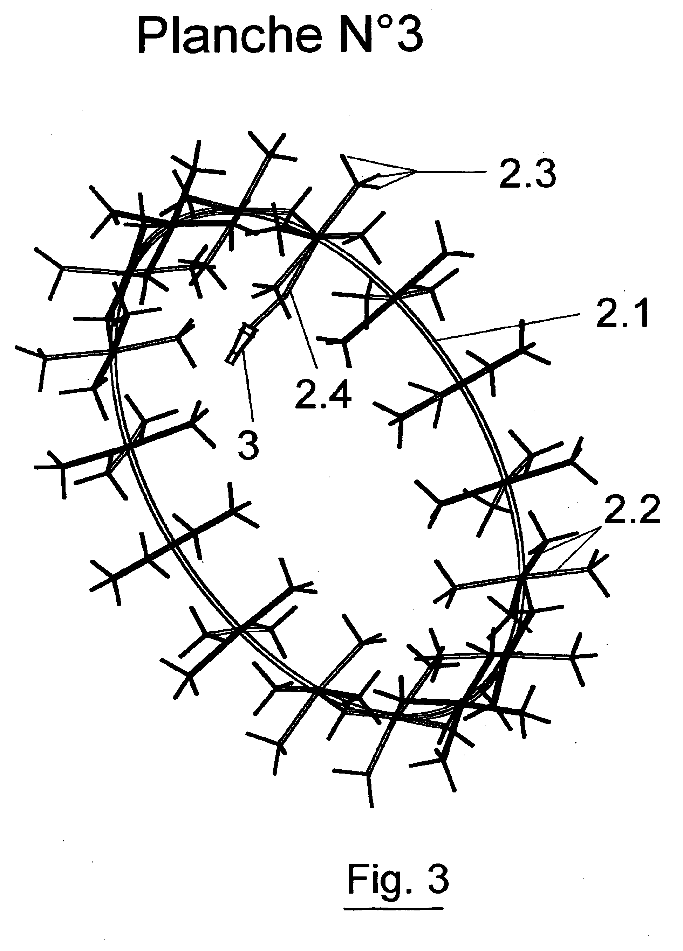

- Fig. 3 :: le cordon 2 de la Fig. 1 suivant la première disposition est représenté isolé. Les cordon principal 2.1, branches de distribution primaire et secondaires 2.2 et 2.3, la branche d'alimentation 2.4, la valve 3.
- Planche N° 4 :: valve de vessies suivant dispositions N° 1, 2, 3 et éventuellement 4 à 14.

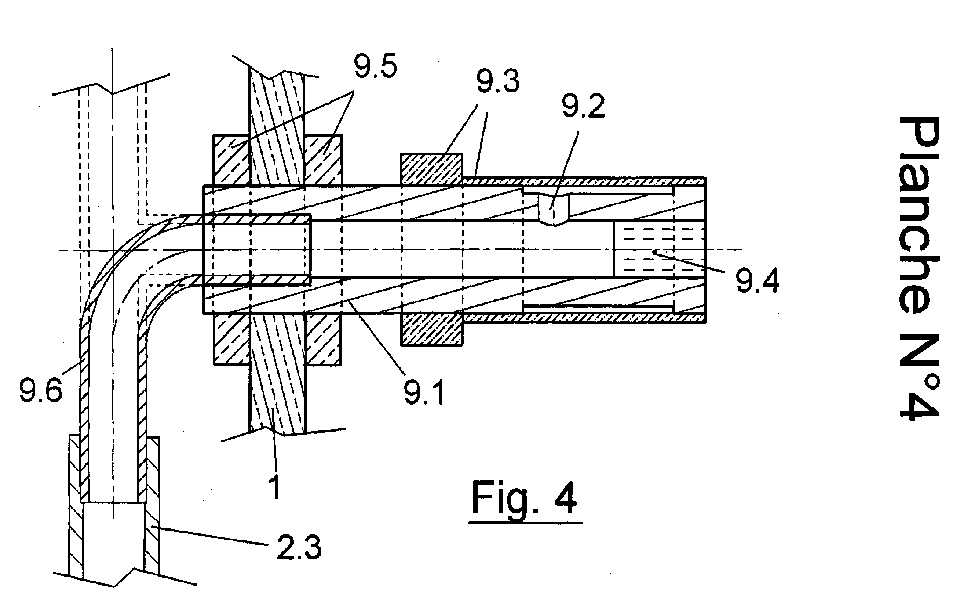

- Fig. 4 :: La valve 9 est constituée d'un tube principal 9.1 muni d'une gorge large et peu profonde dans laquelle se trouve un trou 9.2, la gorge est recouverte par une « chaussette » 9.3 de butyle à paroi mince et légèrement contrainte, avec une partie plus épaisse assurant la liaison sur le tube. Le fond de tube 9 .4 est constitué d'un matériau de bouchage étanche et éventuellement fusible suivant la dixième disposition ou viscoélastique suivant la onzième disposition. La paroi de la vessie 1 est collée/vulcanisée entre deux plaques élastiques sandwich 9.5. Du coté extérieur le capillaire 9.6 raccorde de façon ferme et étanche la valve à la branche secondaire 2.3 du cordon. Le capillaire 9.6 a la forme d'un coude ou d'un « Té » suivant que la branche est terminale ou continue au-delà de la valve.
- Planche N°5:: Vessies en forme de tranche suivant la deuxième disposition représentation d'un système non monté dans le pneu et gonflé à faible pression.

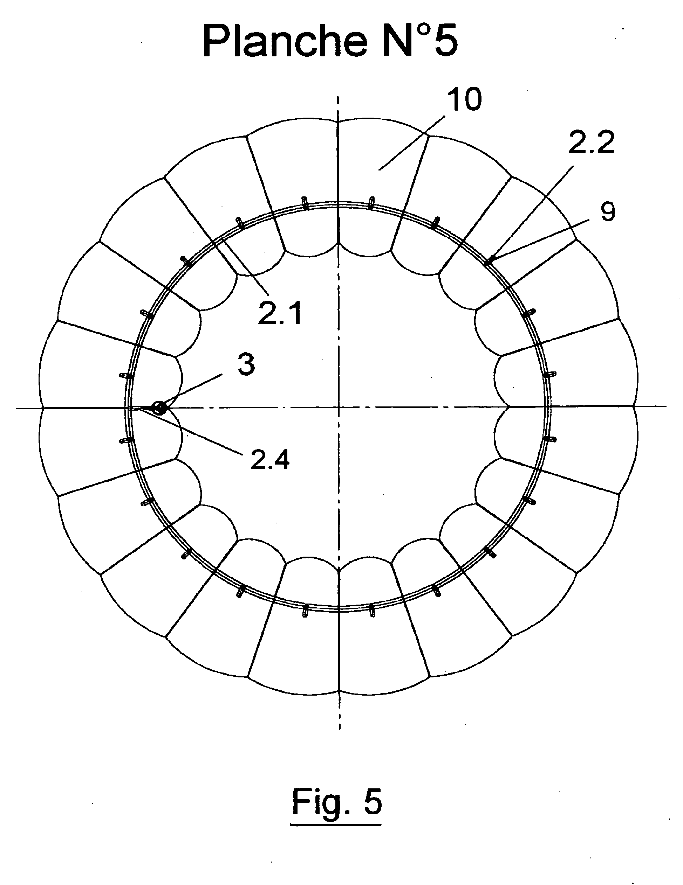

- Fig. 5 :: Les tranches 10 se succèdent pour former un ensemble annulaire. Les parois des tranches consécutives sont accolées pour former une double paroi de liaison. Le cordon principal 2.1 alimenté par sa branche d'alimentation 2.4 et la valve de gonflage 3, distribue l'air dans des branches primaires 2.2 très courtes (ou remplacées par de « Té » et donnant directement sur les valves 9 des vessies/tranches.
- Planche N° 6 :: Vessies en forme de tranche suivant la deuxième disposition, représentation suivant section axiale.

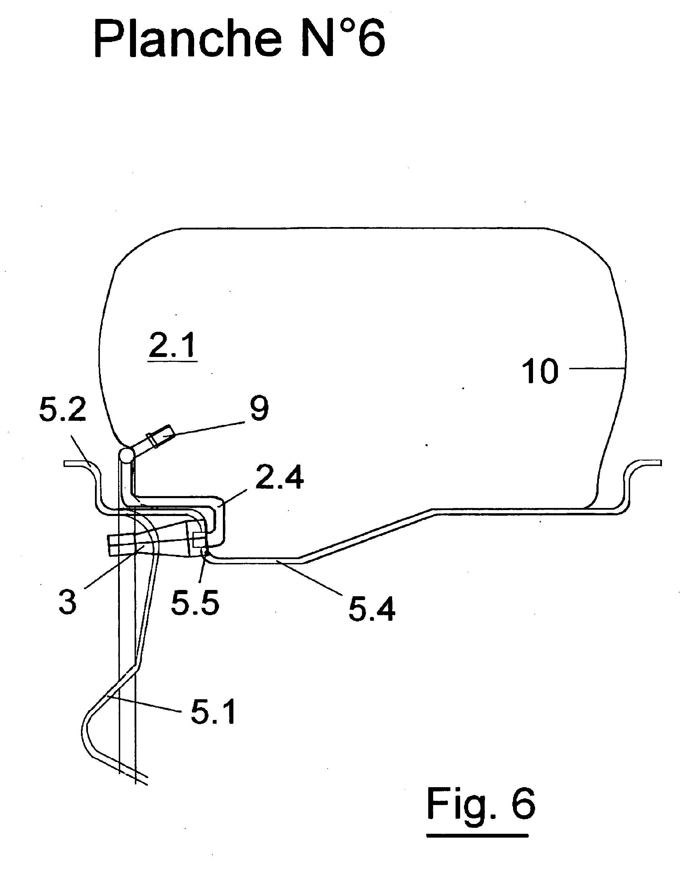

- Fig. 6 :: La tranche 10 épouse la forme intérieure du pneu. La valve de gonflage 3 est passée au travers du trou de jante 5.5. La branche d'alimentation 2.4 passe du fond de jante 5.4 vers le cordon principal 2.1 et passera, au niveau du bord de jante extérieur 5.2, entre le pneu et la paroi de la tranche. Les branches de distribution 2.2 (ou « Té ») sont confondues entre le cordon principal 2.1 et les valves de tranches 9.
- Planche N° 7 :: Vessies en forme de balles suivant la troisième disposition.

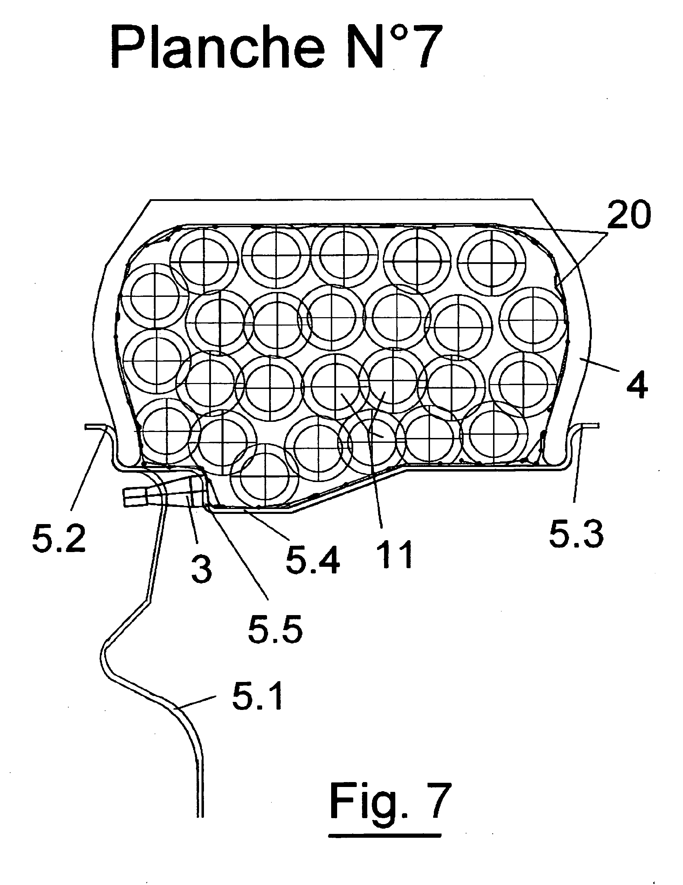

- Fig. 7 :: les vessies / balles 11 sont libres dans l'espace annulaire entre pneu 4 et fond de jante 5.4. Elles sont entourées d'un filet 20 de conditionnement, drain, maintient. Une valve classique 3 est passée dans le trou de jante 5.5. Le pneu est plaqué contre les bords de jante extérieur 5.2 et intérieur 5.3 par la poussée des balles. 5.1 est le flasque de jante.
- Planche N° 8 :: Renfort intérieur de vessie / balle suivant disposition N° 3 et 4.

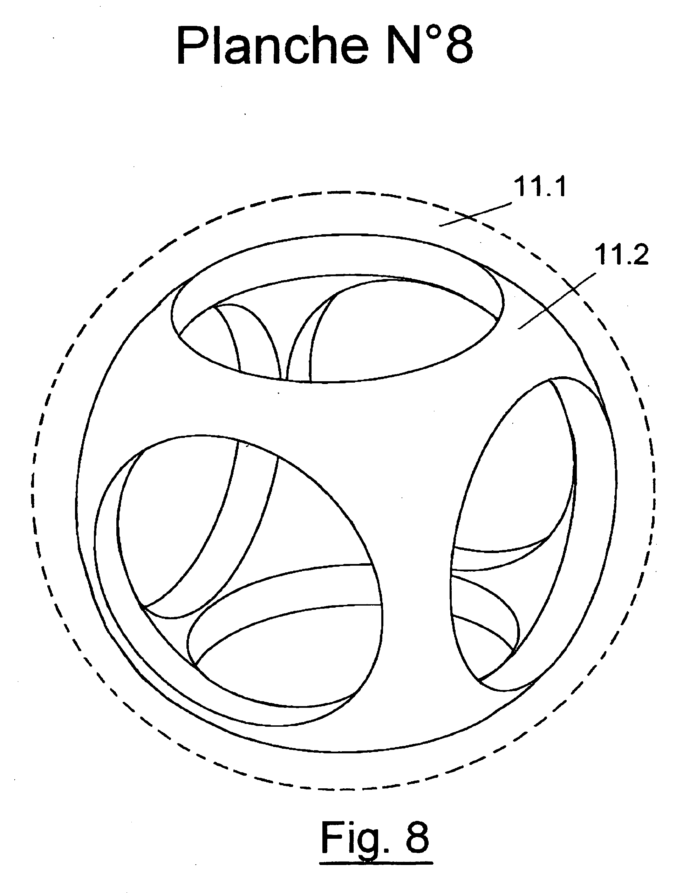

- Fig. 8 :: Le volume en pointillés représente le diamètre extérieur 11.1 de la balle 11 dont l'ajout de renforts 11.2 en surépaisseur à l'intérieur raidit la balle à la dépression.
- Planche N° 9 :: Machine de démontage des systèmes
- Fig. 9 :: vue en section de l'ensemble Roue avec Pneu 4 et jante 5 posée sur sa face intérieure sur le plateau circulaire 15. Les demi mâchoires 17a et 17b via leurs éléments raidisseurs 18 vont être plaqués par la presse 16 sur le flanc supérieur du Pneu 4 et en même temps rapprochées par leur système de serrage 19. La poussée va légèrement au delà de l'épaulement de la gorge du fond de jante.
- Fig. 10 :: Vue de dessus de l'ensemble sans presse et sans roue : demi mâchoires 17a et 17b, raidisseurs 18, système de serrage 19 et plateau 15.

### Liste des repères :

- 1 :: vessies, (fig. 1, 4)
- 2 :: cordon de distribution du gaz de gonflage, (fig. 1, 3, 5, 6)
- 2.1 :: cordon principal, (fig. 1, 3, 5, 6)
- 2.2 :: branches de distribution primaires, (fig. 1, 3, 5),
- 2.3 :: branches de distribution secondaires ou terminales, (fig. 1, 3, 4)
- 2.4 :: branche d'alimentation du cordon, (fig. 1, 3, 5, 6)
- 3:: valve simple de gonflage, (fig. 1,3,5, 6, 7)
- 4 :: pneu, (fig. 1, 2, 7, 9)
- 5 :: jante de roue, (fig.1,2,6,7, 9)
- 5.1:: flasque, (fig.1, 7, 9)
- 5 .2 :: bord de jante extérieur, (fig.1, 2, 6, 7)
- 5.3 :: bord de jante intérieur, (fig.1, 7)
- 5.4 :: fond de jante avec gorge, (fig.1, 2, 6, 7)
- 5.5 :: trou de jante unique pour valve de gonflage 3 (fig. 6, 7)
- 5.6 :: d'un trou taraudé dans la jante pour vissage de la vis de purge, (fig. 2)
- 6 :: languette provisoire d'évent, (fig. 2)
- 7 :: vis de purge ou d'évent, (fig. 2)
- 8 :: tuyau de drain. (fig. 2)
- 9 :: valve des vessies (balles, tranches, anneaux) individuelles, (fig. 4, 5, 6)
- 9.1 :: tube principal de la valve, (fig. 4)
- 9.2 :: trou de la valve, (fig. 4)
- 9.3 :: « chaussette » de butyle à paroi mince, (fig. 4)
- 9.4 :: fond de tube de la valve, (fig. 4)
- 9.5 :: plaques élastiques sandwich, (fig. 4)
- 9.6 :: capillaire à forme d'un coude ou d'un « Té », (fig. 4)
- 10 :: vessies en forme de tranches, (fig. 5, 6)
- 11 :: vessies en forme de balles, (fig. 7)
- 11.1 :: membrane externe de la balle, (fig. 8)
- 11.2 :: renforts internes de la balle, (fig. 8)
- 12 à 14 :: numéros libres.
- 15 :: plateau circulaire d'appui de la machine de démontage du système, (fig. 9, 10)
- 16 :: presse de la machine de démontage du système, (fig. 9)
- 17a et 17b :: demi mâchoires d'appui sur pneu, (fig. 9, 10)
- 18 :: éléments raidisseurs, (fig. 9, 10)
- 19 :: système de serrage des demi mâchoires, (fig. 9, 10)
- 20 :: filet de conditionnement, drainage, maintient, (fig. 7).

### Meilleure manière de réaliser l'invention.

La réalisation des différents caractéristiques de l'invention se fait suivant les indications portées dans chacun des chapitres.

Pour une réalisation typique pour une voiture de tourisme, on utilisera un ensemble de grappes formées de vessies en butyle de 55 mm de diamètre et 1 mm d'épaisseur avec valves en polyéthylène à chaussette de butyle et un cordon à ramifications pour 192 vessies. La jante sera munie d'un trou de passage de l'embout de gonflage du cordon et d'un trou taraudé de 4 mm avec vis de purge et petit tuyau de drainage face à ce trou de passage. L'ensemble des vessies et cordon est contenu dans un filet noué en fibres de nylon de maillage 10 mm.

Les vessies sont renforcées par des bandages en maillage nylon en zigzag les rigidifiant dans leur plage d'utilisation. La pression de gonflage des vessies est de 2.1 bars.

### Possibilités d'applications industrielles.

L'invention augmente la sécurité anti-éclatement du pneu, et évite ainsi la perte de contrôle du véhicule et les accidents potentiels. Elle permet de ne pas avoir à changer la roue immédiatement (utilisateur en tenue non adéquate, mains sales, retard, urgence à éviter les projectiles d'armes à feu, non disponibilité d'une zone d'arrêt pour intervention), une réduction des coûts de remplacement systématique du pneu, elle évite d'avoir à stocker une roue de secours et libère sa place dans le coffre.

Elle a essentiellement des applications civiles pour les véhicules de route, de transport, de courses, de sécurité, de police, agricoles, de chantier, voire d'aviation...

Au niveau des poids lourds, elle augmente la sécurité de conduite du véhicule et de l'environnement (transport de produits dangereux), et l'autonomie par la non nécessité d'avoir recours à des moyens d'intervention lourds en cas de crevaison.

Elle contribue à la dissuasion d'attaque de fourgons de transport de fonds.

## Revendications

1. Dispositif de Chambre à air increvable destinée à aider un véhicule muni de pneumatiques à poursuivre sa route sans avoir à réparer la roue après une crevaison même très sévère, **caractérisé en ce qu'**il consiste en la mise en place à l'intérieur de n'importe quel type de pneu standard qu'il soit avec ou normalement sans chambre, taille haute ou basse, temps sec, neige ou tout terrain, pour véhicule haut de gamme ou standard, de route ou de transport, d'un système constitué pour chaque roue de :
un ensemble de vessies (1) indépendantes déformables, de type chambre à air, pouvant augmenter de volume et étant étanches au gaz de gonflage sous pression, et dont les éléments constitutifs n'interfèrent pas avec le bord de jante lors du montage sur la roue, l'entrée du gaz de gonflage de chaque vessie se faisant par une mini valve de non retour (9) fermée étanche à très faible pression dans le sens retour et permettant une entée de gaz dès les premiers grammes de pression, l'ensemble remplissant après gonflage le volume du pneu (4) et nécessitant une intervention manuelle volontaire destructive sur des éléments du système à l'intérieur du pneu pour en permettre le démontage.

2. Dispositif de Chambre à air increvable selon la revendication 1 **caractérisé en ce que** :
les vessies indépendantes sont des grappes de vessies souples (1) en caoutchouc, d'un diamètre variable du pouce à quelques pouces en fonction de l'application, dont les mini valves de non retour (9) sont reliées entre elles par un cordon souple (2) constitué du cordon principal (2.1), de ramifications ou branches de distribution (2.2, 2.3, 2.4) et d'un embout pour le gonflage (3) placé dans l'orifice (5.5) de la jante (5),
et **en ce que** :
lors l'opération de gonflage un système (6 et 5.6 ) aide à purger l'air contenu dans le pneu afin que les vessies remplissent tout son volume et assurent en cas de crevaison une pression résiduelle dans le ratio approximatif du nombre de vessies restantes sur le nombre initial même en cas de grande pénétration,

3. Dispositif de Chambre à air increvable selon la revendication 1 **caractérisé en ce que** :
les vessies indépendantes sont les tranches (10) d'une chambre à air cloisonnée dans des plans axiaux, ces tranches d'un nombre compris environ entre 10 et 50 forment un ensemble annulaire et épousent la forme intérieure du pneu, leurs parois consécutives étant accolées pour former une double paroi de liaison, leurs mini valves de non retour (9) étant chacune reliée par une branche primaire courte (2.2) à un cordon principal (2.1) qui parcourt un chemin proche du bord extérieur de la jante et est alimenté via sa branche d'alimentation (2.4) par la valve de gonflage (3),
et **en ce que** :
lors l'opération de gonflage un système (6 et 5.6) aide à purger l'air contenu dans le pneu et que les tranches remplissent tout son volume et assurent en cas de crevaison une pression résiduelle dans un ratio dépendant du volume crevé par rapport au volume total.

4. Dispositif de Chambre à air increvable selon la revendication 1 **caractérisé en ce que**:
les vessies indépendantes sont des balles (11) ayant chacune une mini valve de non retour (9) et ayant une structure semi rigide (11.2) qui leur permet de conserver leur volume nominal lorsqu'il existe une surpression extérieur de quelques grammes par rapport à la pression intérieure, et **en ce que** le principe de gonflage consiste à introduire un nombre défini de balles dans le pneu avant la fermeture de sa deuxième tringle dans la jante, à gonfler lentement le pneu par sa valve de gonflage jusqu'à 30 à 40 % au dessus de la pression nominale et à le dégonfler ensuite rapidement, les balles de par leur pression intérieure se gonfleront et assureront le remplissage et la pression nominale dans le pneu.

5. Dispositif de Chambre à air increvable selon les revendications précédentes 2 ou 3 **caractérisé en ce que** le système de purge lors du gonflage est une languette provisoire d'évent (6) plate et creuse à intercaler entre le bord de jante et la tringle du pneu et à retirer après le gonflage.

6. Dispositif de Chambre à air increvable selon les revendications précédentes 2 ou 3 **caractérisé en ce que** le système de purge lors du gonflage est du type vis de purge (7) à visser étanche après le gonflage, un bout de tuyau de drain (8) étant situé en face du trou de purge (5.6) pour éviter son obstruction par une vessie, le trou de purge étant lui même à proximité du trou de valve (5.5) sur la jante.

7. Dispositif de Chambre à air increvable selon l'une des revendications précédentes **caractérisé en ce que** les vessies indépendantes (1,10 et 11) sont assemblées dans un filet (20) constitué de mailles de petite dimension, environ 1 cm par un cm, en fibres et jointes par des noeuds, ce filet évitant l'évasion des vessies indépendantes si la crevaison laisse une ouverture importante dans le pneu, maintenant les parois des vessies en face d'un trou béant cour éviter la formation d'une hernie, grâce à la porosité des ses fibres et ses noeuds, drainant l'air pour la vidange du pneu lors du gonflage, permetant la livraison commerciale en nombre et forme requise des balles ainsi que les test d'un ensemble complet, et contenant les balles pour la sécurité du personnel lors du démontage.

8. Dispositif de Chambre à air increvable selon l'une des revendications précédentes **caractérisé en ce que** les vessies indépendantes sont construites avec des bandages croisés autour de la paroi en caoutchouc, ces bandages étant réalisés suivant des latitudes et longitudes avec un tissage en zigzag, la direction des fibres permettant à la vessie d'augmenter aisément de dimension dans les deux directions de sa surface et donc de volume jusqu'à ce que les zigzag soient devenus droits, ce dispositif permettant de limiter l'expansion, d'éviter que toutes les balles n'explosent en cascade, et de rigidifier la balle à la dépression.

9. Dispositif de Chambre à air increvable selon les revendications précédentes **caractérisé en ce que** les mini valves de non retour (9) sont constituées d'une chaussette en butyle (9.3) montées sur un tube borgne (9.1) percé d'un petit trou latéral (9.2), étanche même lors d'une égalité de pression entre les ramifications du cordon (2) et la vessie (1),

10. Dispositif de Chambre à air increvable selon les revendications précédentes **caractérisé en ce que** les valves (9) possèdent un élément dans le fond de valve (9.4) en caoutchouc « contraint » à l'intérieur du tuyau (9.2) permettant de vider les vessies par désaccouplement du cordon et utilisation d'une aiguille creuse (seringue), l'élément (9.4) se refermant de façon étanche après l'opération, les vessies (1,10,11), pouvant éventuellement être réutilisées.

## Claims

1. Unpucturable inner tube designed to help a tire equipped vehicle follow its course without stopping and repairing the wheel even after a severe puncture or burst, **characterized in that** it consists in the fitting inside any standard type of tire, whether with tube or tubeless, with regular or low sidewalls, designed for rain, snow or all tracks, for standard, luxury or transportation vehicles, of a system comprising for each wheel:
A cluster of independent flexible bladders (1), of the inner tube type, that can increase in volume and being tight to pressure inflating gas, and of which the elements do not interfere with the rim during mounting operation on the wheel, the inlet of inflating gas in each bladder being through a mini inlet non return valve (9) that lets gas in under a very low differential pressure of a few grams per square centimetre and closes tightly with very low negative differential pressure, the system filling entirely the tire volume after inflation and requiring a manual operation with destruction of some elements inside of the tire to allow dismantling of the tire for repair.

2. Unpuncturable inner tube according to claim 1 **characterised in that**:
the independent bladders are clusters of flexible rubber bladders (1) of diameter varying from 1 inch to a few inches according to the application, and for which the mini non return valves (9) are all connected to a flexible cord (2) with its main cord (2.1), its distribution branches (2.2, 2.3, 2.4) and its inflating valve (3) that goes through the valve hole (5.5) of the rim (5),
and **in that**:
during inflation a system (6 et 5.6) aids to vent the air trapped inside the tire so that the bladders fill in all the tire volume and in case of puncture will be able to provide a residual pressure to the tire to a ratio more or less equal to the ratio of non punctured bladders to the initial number of bladders even if the puncture is very severe.

3. Unpuncturable inner tube according to claim 1 **characterised in that** :
the independent bladders are the segments (10) of an air chamber that is partitioned in axial direction, these segments numbering between around 10 to 50 form a ring like set and take on the inside shape of the tire, the consecutive segments being placed side by side to form a double wall, their mini non return valves (9) being each connected through a short primary branch (2.2) to the main cord (2.1) that runs close to the outside rim edge (5.2) is fed via its feeding branch (2.4) to the inlet valve (3)
and **in that**:
during inflation a system (6 et 5.6) aids to vent the air trapped inside the tire so that the segments fill in all the tire volume and in case of puncture will be able to provide a residual pressure to the tire to a ratio depending on the ratio of the punctured volume to the total volume.

4. Unpuncturable inner tube according to claim 1 **characterised in that**:
the independent bladders are balls (11) being each fitted with a mini non return valve (9) and having a semi rigid structure (11.1) that allows them to keep their nominal volume while the outside pressure is a few grams of water column higher than the pressure inside the ball,
and **in that**:
the inflation principle consists in introducing a definite number of balls inside the tire volume before closing its last tire beads into the outside rim edge, slowly inflating the tire through its inflating valve up to a pressure 30 to 40% above the nominal pressure and then to rapidly deflate the tire, the balls increasing their size due to their inside pressure and thus filling the tire to its nominal pressure.

5. Unpuncturable inner tube according to previous claim 2 or 3 **characterised in that**:
the venting system during inflation is a temporary flat pipe (6) to be inserted between the rim and the bead wires and to be pulled out after inflation phase.

6. Unpuncturable inner tube according to claim 2 or 3 **characterised in that**:
the venting system during inflation phase is made of a venting cap (7) to screw tightly after inflation phase, a drain pipe (8) being located in front of the venting hole (5.6) and preventing its plugging by a inflated bladder , the venting hole being located near the rim inlet valve hole (5.5).

7. Unpuncturable inner tube according to a previous claims **characterised in that** :
the independent bladders (1, 10 and 11) are assembled in a net (20) made up of mesh of a small dimension, about 1 centimetre by 1 centimetre, out of fibre and connected by knots, this net preventing the independent bladders from escaping if the puncture leaves a large opening in the tire, maintaining the bladders' walls facing the opening to avoid the formation of a hemia, draining the air during the venting of the tire due to the porous characteristic of its fibres and of its knots, allowing commercial delivery with the required number of balls and the adequate shape as well as the test of a complete system and finally controlling the balls for the safety of the personnel during the dismantling phase.

8. Unpuncturable inner tube according to a previous claim **characterised in that** :
independent bladders are built with fibre canvas around their rubber wall membrane, the weaving he canvas/bandage following latitude and longitude patterns made with zigzagging threads, the section of the fibres allowing the bladder to easily increase in dimension within the two directions of surface and thus increase its volume until the zigzagging threads become straight, a limit to the pansion of the bladders being thus obtained, preventing the balls from exploding successively and reasing the rigidity of the balls to vacuum.

9. Unpuncturable inner tube according to the previous claims **characterised in that**: the mini non return valves (9) are made of a butyl sock (9.3) fitted on a blind tube (9.1) drilled with a small lateral hole (9.2), gas tight even in case of pressure balance between the branches of the cord (2) and the bladder (1).

10. Unpuncturable inner tube according to the previous claims **characterised in that**: the mini non return valves (9) have a rubber pre stressed plug (9.4) at the blind extremity of the valve tube (9.2) that make possible the emptying of the bladders by use of a needle (syringe) after separation on the bladder from the cord, the plug (9.4) being again closed tightly at the end of the operation, the reuse of the bladders (1, 10, 11) being then possible.

## Patentansprüche

1. Nicht durchstechbarer Innenreifen der einem Fahrzeug erlaubt, nach einer normalen oder sehr gestrengen Reifenpanne und ohne das Rad zu reparieren, seine Strecke zu verfolgen der besteht in der Einführung in irgendeinem Reifen Typ, üblich oder Schlauchlosreifen, normales Größe oder Niederquerschnittreifen, für trockene Straße, Schnee, alles Terrain, erstklassiges oder Standard Fahrzeug, PKV oder LKV, ein System das für jedes Rad besteht aus:
eine Gesamtheit unabhängig und verformbar Blasen (1), Luftschlauch Typ seiend, von Volumen zunehmen könnend, am Aufblasen-Gas unter Druck luftdicht seiend, und deren Elemente nicht mit den Felgenhorn anlässlich der Montage auf dem Rad interferieren, der Lufteingang jeder Blase seiend durch ein deutlich Mini-Rückschlagventil (9) das sich unter einigen Gramm Drück öffnet und auch voll dicht unter zehr kleinem Gegendrück ist, so dass nach Aufblasen wird die Gesamtheit das Reifenvolumen erfüllen und wird nur nach freiwillige vernichtende Intervention Demontage möglich sein.

2. Nicht durchstechbarer Innenreifen nach Anspruch 1 **dadurch gekennzeichnet dass** die Gesamtheit von unabhängigen Blasen ist Traubenförmig mit elastische Gummi Blasen (1) die, entsprechend der Anwendung, zwischen eins und einigen Zollen Durchmesser sind und deren Mini Rückschlagventilen (9) zusammen von einer mehrteiliger biegsame Schnur (2), mit einer wichtigsten Schnur (2.1), Verteilung Schnüren (2.2) 2.3 (2.4), und Ansatzstück für das Aufblasen (3) das in der Felge Öffnung (5.5) liegt, verbindet sind,
und dass, bei Aufpumpen wird ein Entlüftung- System (6 und 5.6) der Luft die im Reifen steht abzulassen helfen, so dass die Blasen den Gesamtvolumen füllen und auch in Fall von Große Panne ein Restdruck in der Verhältniszahl von übrigen Blasen auf der anfänglichen Zahl versichern könnten.

3. Nicht durchstechbarer Innenreifen nach Anspruch 1 **dadurch gekennzeichnet dass** die unabhängigen Blasen sind die Scheiben (10) eines Luftschlauches, die in axialen Plänen geteilt wird, diese Scheiben zwischen ungefähr 10 und 50 bilden eine ringförmige Gesamtheit und folgen der inneren Form des Reifens, die nachfolgenden Wänd verbunden seiend um eine doppelte Verbindung-Wand zu bilden, und jedes Mini Rückschlagventil (9) seiend gebunden über einer kurzen primären Schnur (2.2) an einer wichtigsten Schnur (2.1) die einem Weg beim
außerhalb Felgenhorn durchläuft und die durch seinem Luftzufuhr Schnur (2.4) vom Aufblasen-Ventil (3) versorgt wird, und dass:
bei Aufpumpen wird ein Entlüftung-System (6 und 5.6) der Luft die im Reifen steht abzulassen helfen, so dass die Scheiben den Gesamtvolumen füllen und in Fall von Panne einen Restdruck in der Verhältniszahl von übrigen Scheiben auf der anfänglichen Zahl versichern könnten.

4. Nicht durchstechbarer Innenreifen nach Anspruch 1 **dadurch gekennzeichnet dass** die unabhängigen Blasen sind Bälle (11) mit einem Mini Rückschlagventil (9) ausgerüstet, und deren halbstarr Struktur (11.1) erlaubt ihr nominales Volumen auch wenn es gibt einen außerhalb Drück einiger Gramm hoher als die inneren Druck zu bewahren, und dass,
folgen dem Aufpumpen-Prinzip, eine bestimmte Zahl von Bällen wurde in den Reifen vor die Schließung seiner zweiten Wulstzone in die Felge einzuführen, und denn langsam den Reifen durch sein Aufblasen-Ventil bis über 30 bis 40% des nominalen Druckes aufzublasen und danach es schnell zu entleeren damit die Bälle durch ihren inneren Druck blähen und die Füllung und den nominalen Druck des Reifens versichern.

5. Nicht durchstechbarer Innenreifen nach einem der Ansprüche 2 oder 3 **dadurch**
**gekennzeichnet dass** bei Aufpumpen, das Entlüftung System besteht auf einem provisorischen Luftloch-Zünglein (6) darin zwischen dem Felgenhorn und der Wulstzone des Reifens einzuschalten und nach dem Aufpumpen zurückzuziehen.

6. Nicht durchstechbarer Innenreifen nach einem der Ansprüche 2 oder 3 **dadurch**
**gekennzeichnet dass** das Entlüftung System besteht auf einer Schraube (7) die nach dem Aufpumpen luftdicht geschraubt wird, auf einem Stuck Drainage Schlauch (8) das gegenüber dem Entlüftung-Loch (5.6) liegt um die Verstopfung durch eine Blase wand zu verhindern, dieses Entlüftung-Loch beim Ventil-Loch (5.5) seiend.

7. Nicht durchstechbarer Innenreifen nach einem der Ansprüche 1 bis 6 **dadurch**
**gekennzeichnet dass** die unabhängigen Blasen (1, 10 und 11) werdend in einem Netz (20) aus Fasern und Knoten nach einem kleinen Masche von ungefähr 1 Zentimetern, versammeln, und wenn die Reifenpanne eine große Öffnung im Reifen macht, wird dieses Netz die Flucht der Blasen oder die Bildung einem Bruch vermeiden, und dank der Porosität seinen Fasern und Knoten, Entlüftung bei aufpumpen erlauben, auch Lieferung der Bälle in Menge und in Form, Probe für eine komplette Gesamtheit, und die Sicherheit des Personales bei Demontage möglich machen.

8. Nicht durchstechbarer Innenreifen nach einem der Ansprüche 1 bis 7 **dadurch**
**gekennzeichnet dass** die unabhängigen Blasen werden mit Verbänden gebaut, die um die Gummi Wand gekreuzt werden, diese Verbände werdend nach Breiten und Längen mit einem Gewebe in Zickzack realisiert, so dass der Blase Oberfläche in den zwei Direktionen und Volumen zuzunehmen könnte, bis der Zickzack gerade geworden wäre um die Expansion der Wände und Bälle seriell Explosion zu begrenzen, und auch die Ball Festigkeit unter Tiefdruck anzuheben.

9. Nicht durchstechbarer Innenreifen nach einem der Ansprüche 1 bis 8 **dadurch**
**gekennzeichnet dass** die Mini Rückschlagventilen (9) seiend aus einem Butyl Strumpf (9.3) um ein Röhr (9.1) mit einem Korken am Ende und kleinem seitlichen Loch (9.2) gemacht, und dicht seiend auch wenn es gibt den gleichen Drück in der Schnur (2) und in der Blase (1).

10. Nicht durchstechbarer Innenreifen nach einem der Ansprüche 1 bis 9 **dadurch**
**gekennzeichnet dass** es gibt im Ventil-Boden (9.4) des Ventile (9) ein Gummi Element im Schlauch (9.2) eingedrückt, erlaubend die Blasen Entleerung nach Abhebung von der Schnur und dank einer Spritze, und danach, das Element (9.4) wieder luftdichte seiend um die Blasen (1, 10, 11) wiederverwendbar zu machen.
